# EUROPEAN PATENT APPLICATION

(11) **EP 3 591 216 A1**
(43) Date of publication of application: **08.01.2020**
(21) Application number: 18305868.4
(22) Date of filing: 03.07.2018
(51) Int. Cl.: F03B 3/12

(54) **RUNNER BLADE**

(71) Applicant: GE Renewable Technologies, 38100 Grenoble (FR)
(72) Inventor: PHAN, Hai Trieu, 38041 GRENOBLE (FR); BOMBENGER, Antoine, 38041 GRENOBLE (FR); MONTEYREMARD, Adrien, 38041 GRENOBLE (FR); VANVOLSEM, Michael, 38041 GRENOBLE (FR)
(74) Representative: Moutard, Pascal Jean

(57) **Abstract**

The invention concerns a runner blade (300) comprising two opposite faces, said, respectively, pressure face and suction face (300b), connected by a contour, said contour having a hub connecting section (310) opposite to a peripheral section (330) which are connected by two edges said, respectively, leading edge and trailing edge (340), the suction face is provided with a concave region (350) extending radially with respect to the runner blade.

## Description

### TECHNICAL FIELD AND PRIOR ART

The invention concerns a runner blade. In particular, the invention concerns a runner blade intended to be implemented in a hydroelectric turbine. The runner blade according the present invention is intended to reduce cavitation, especially in the close proximity to the runner hub.

Hydroelectric turbines used for hydropower generation are generally provided with a runner or a propeller which comprises runner blades connected to a hub rotationally mounted on a rotation shaft.

In operation, a stream of water enters the hydroelectric turbine at high pressure, and exerts a force on the runner blades, which triggers their moving, and consequently the rotation of the runner around the axis of rotation.

During rotation of the runner, a pressure decrease on a suction side face, opposite to the pressure side, of the blades can be observed. As the pressure drops below the vapor pressure of water, cavitation bubbles form and coalesce, which affect the performances of the turbine and then collapse, thus causing vibrations, and damaging of the blades surface.

For a given runner diameter, in order to prevent, or at least reduce, cavitation bubble formation, increase of the submergence of the turbine may be contemplated. However, this solution which increases considerably the cost is not satisfactory.

Alternatively, reduction of cavitation can also be achieved by decreasing the hub diameter. This solution is not satisfactory either since it does not let enough room for incorporating blade orientation mechanism as required in Kaplan type runners.

An aim of the invention is thus to propose a runner blade for which cavitation is avoided, or at least limited.

In particular, an aim of the present invention is to propose a runner blade for which cavitation is avoided or at least limited in the close proximity of the hub of the runner.

### SUMMARY OF THE INVENTION

The aforementioned aims are, at least partly, achieved by a runner blade comprising two opposite faces, said, respectively, pressure face and suction face, connected by a contour, said contour having a hub connecting section opposite to a peripheral section which are connected by two edges said, respectively, leading edge and trailing edge, the suction face is provided with a concave region extending along a radial line of the runner blade, said radial line being a line joining the hub connecting section and the peripheral section and along which the runner blade extend.

In other words, the concave region extending radially.

By "extending radially", it is intended an extension along a direction from one of the hub connecting section and the peripheral section toward the other of the hub connecting section and the peripheral section.

According to a mode of implementation, profiles of the concave region, taken along concentric paths joining the leading edge and the trailing edge, display a valley surrounded by two peaks said, respectively, leading peak and trailing peak.

According to a mode of implementation, the distance between the leading edge and the leading peak is less than 30% of the distance between the leading edge and the trailing edge.

According to a mode of implementation, the distance between the trailing edge and the trailing peak is less than 30% of the distance between the trailing edge and the leading edge.

According to a mode of implementation, the valley is located at a distance for from the leading edge which in the 40% to 60% range of the distance between the trailing edge and the leading edge.

According to a mode of implementation, the height difference between the two peaks and the valley is below 20%, advantageously below 10%, of the maximum thickness of the runner blade.

According to a mode of implementation, the concave region gets shallower when extending along the radial direction either from the connecting section or the peripheral section.

According to a mode of implementation, the extension of the concave region is less than 25%, advantageously less than 20%, of the total span of the runner blade.

According to a mode of implementation, the runner blade further comprises connection means adapted for connecting the hub connection section of the runner blade to a hub.

According to a mode of implementation, the concave region extends from the connection means.

The invention also concerns a runner comprising a hub provided with runner blades, advantageously three to six runner blade, according to the present invention.

The invention also concerns a turbine for hydropower generation comprising the runner according to the present invention.

### BRIEF DESCRIPTION OF THE DRAWINGS

Other characteristics and advantages of the invention will become clear from the description that follows of modes of implementing the runner blade according to the invention, given as non-limiting examples, with reference to the appended drawings in which:
- Figure 1 is a schematic representation along a longitudinal sectional plan of a turbine provided with runner blades according to the present invention;
- Figure 2 is a schematic representation in perspective of a turbine runner provided with runner blades according to the present invention;
- Figures 3a and 3b are schematic representation in perspective of a runner blade according to the present invention;
- Figure 4 is graphical representation of a suction face profile taken along the concentric path AA', in particular, the vertical axis represents the relative height H (in arbitrary units) as a function of the position P along the concentric path AA' (horizontal axis, in arbitrary units).

### DETAILLED DESCRIPTION OF SPECIFIC EMBODIMENTS

Although specifically described with reference to the runner, and notably the runner blades, of a turbine for hydropower generation, other applications of the invention, like boat propulsion propellers, may be contemplated.

According to the present invention, the runner blade comprises, on its suction face, a concave region extending along the spanning direction of said runner blade. Within the scope of the present invention, concave region means a region having a gutter shape, in particular a rounded gutter shape. When implemented on the blade suction face of a rotating runner, said concave region locally induces an increase of pressure, and as a consequence reduces cavitation bubble growth.

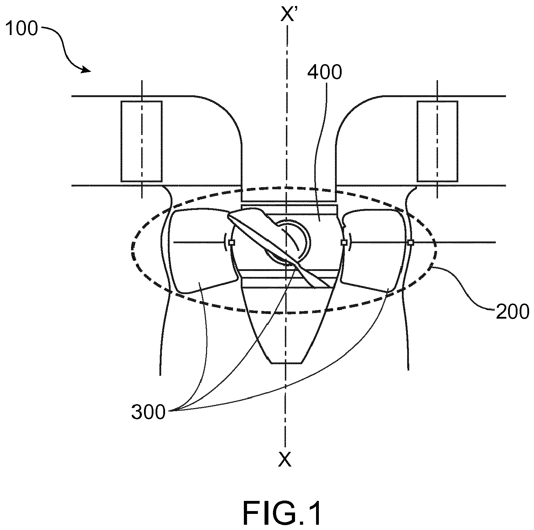

The invention will now be described in connection with the appended figures 1, 2, 3a, 3b, and 4.

In particular, the figure 1 represents a turbine 100 for hydropower generation provided with a runner 200 mounted on a rotation axis XX'.

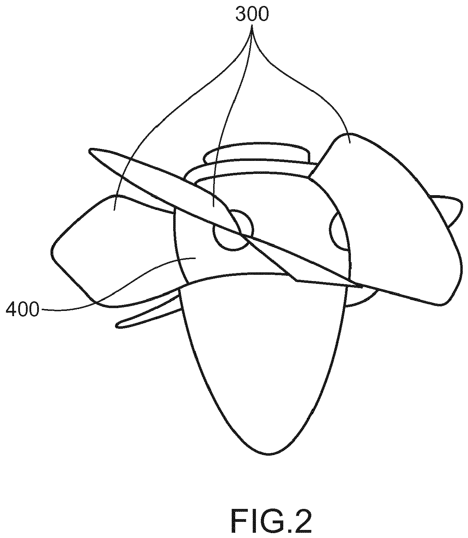

The runner 200 is provided with a plurality of runner blades 300 connected to a hub 400 (figures 1 and 2).

A runner blade 300 comprises two opposite faces, said, respectively, pressure face 300a and suction face 300b.

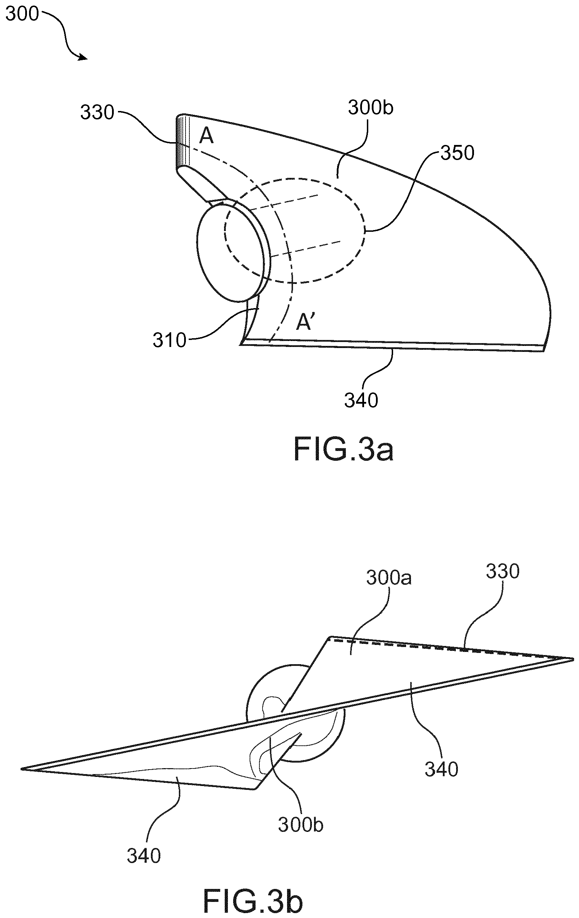

Both faces are connected by a contour having a hub connecting section 310 and a peripheral section 320 which are connected by two edges said, respectively, leading edge 330 and trailing edge 340 (figures 3a and 3b).

Both leading edge 330 and trailing 340 define two specific radial direction along which the runner blade 300 spans. In particular, the runner blade mean profile defines radial lines along which the runner blade spans. Said radial lines intersect the axis of rotation XX'.

The runner blade 300 further comprises a concave region 350 (delimited by the dashed lines in figure 3a). The concave region 350 can reflect thickness law variation. In particular, the thickness law of the runner 300 can display local extrema related to the concave region 350. The thickness law is relating to a thickness profile of section of the runner blade taken along a concentric path AA' that will be described later in the description.

The concave region 350 thus locally induces a pressure increase in its vicinity during rotation of runner, so that cavity bubbles formation is less likely to occur.

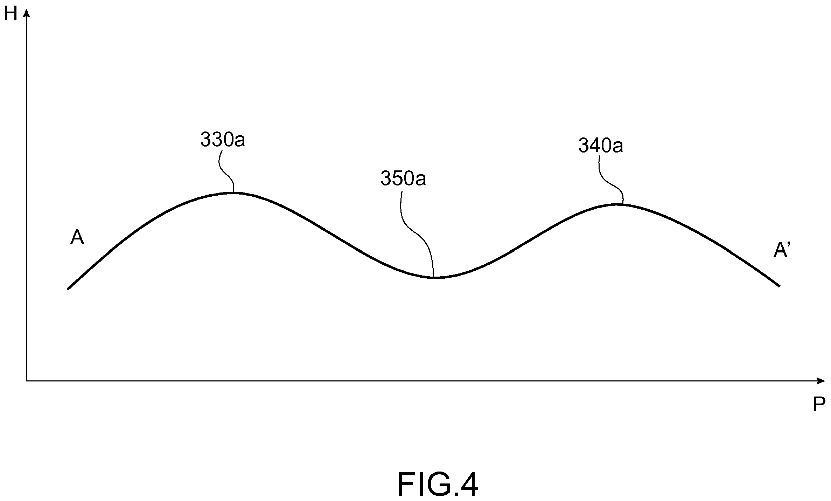

Advantageously, profiles of the concave region, taken along a concentric path AA' joining the leading edge and the trailing edge (figure 3a, path AA'), display a valley 350a surrounded by two peaks said, respectively, leading peak 330a and trailing peak 340a (figure 4).

Concentric paths AA' represent concentric camber lines, with respect to the axis of rotation, of the suction face. In particular, concentric paths AA' and the radial lines form a mesh wherein each radial line extends perpendicularly to the tangent of said concentric lines AA'.

Peaks and valley, within the scope of the present invention, are associated with smooth variations of the surface. In other words, the first and second derivative of the suction face along the concentric path AA' are continuous.

The distance along the concentric path AA' between the leading edge 330 and the leading peak 330a can be less than 30% of the distance between the leading edge 330 and the trailing edge 340.

The distance along the concentric path AA' between the trailing edge 340 and the trailing peak 340a can be less than 30% of the distance between the trailing edge 340 and the leading edge 330.

Furthermore, the valley 350a can be located, along the concentric path AA', at a distance from the leading edge 330 which is in the 40% to 60% range of the distance between the trailing edge and the leading edge.

Besides, the height difference between the two peaks and the valley is below 20%, advantageously below 10%, of the maximum thickness of the runner blade.

The concave region gets shallower when extending along the radial direction either from the connecting section or the peripheral section.

Advantageously, the extension of the concave region is less than 25%, advantageously less than 20%, of the total span of the runner blade.

The runner blade further can comprise connection means adapted for connecting the hub connection section of the runner blade to a hub.

In a preferred embodiment, the concave region extends from the connection means.

## Claims

1. Runner blade (300) comprising two opposite faces, said, respectively, pressure face (300a) and suction face (300b), connected by a contour, said contour having a hub connecting section (310) opposite to a peripheral section (320) which are connected by two edges said, respectively, leading edge (330) and trailing edge (340), the suction face is provided with a concave region (350) extending along a radial line of the runner blade, said radial line being a line joining the hub connecting section and the peripheral section and along which the runner blade extend.

2. Runner blade according to claim 1, wherein profiles of the concave region (350), taken along a concentric path joining the leading edge (330) and the trailing edge (340), display a valley (350a) surrounded by two peaks said, respectively, leading peak (330a) and trailing peak (330b).

3. Runner blade according to claim 2, wherein the distance between the leading edge (320) and the leading peak (330a) is less than 30% of the distance between the leading edge (320) and the trailing edge (340).

4. Runner blade according claims 2 or 3, wherein the distance between the trailing edge (340) and the trailing peak (340a) is less than 30% of the distance between the trailing edge (340) and the leading edge (320).

5. Runner blade according to any of claims 2 to 4, wherein the valley is located at a distance from the leading edge (330) which is in the 40% to 60% range of the distance between the trailing edge (340) and the leading edge (330).

6. Runner blade according the any of claims 2 to 5, wherein the height difference between the two levelled peaks and the valley is below 20%, advantageously below 10%, of the maximum thickness of the runner blade.

7. Runner blade according to any of claims 1 to 6, wherein the concave region gets shallower when extending either from the connecting section or the peripheral section.

8. Runner blade according to any of claims 1 to 7, wherein the radial extension of the concave region is less than 25%, advantageously less than 20%, of the total span of the runner blade.

9. Runner blade according to any of claims 1 to 8, wherein the runner blade further comprises connection means adapted for connecting the hub connection section of the runner blade to a hub.

10. Runner blade according to claim 9, wherein the concave region extends from the connection means.

11. Runner comprising a hub provided with runner blades, advantageously three to six runner blades, according to any of claims 1 to 10.

12. Turbine for hydropower generation comprising the runner of claim 11.
